# EUROPÄISCHE PATENTSCHRIFT

(11) **EP 1 591 282 B1**
(45) Veröffentlichungstag und Bekanntmachung des Hinweises auf die Patenterteilung: **20.05.2009**
(21) Anmeldenummer: 05006243.9
(22) Anmeldetag: 22.03.2005
(51) Int. Cl.: B60H 1/00

(54) **Verfahren zur Steuerung einer Klimaanlage und Klimaanlage für ein Fahrzeug**
Method for the controlling of an airconditioning system and an airconditioning system for a vehicle
Procédé de régulation d'une installation de climatisation et un dispositif de climatisation pour un véhicule

(30) Priorität: 27.04.2004 DE 102004020741
(43) Veröffentlichungstag der Anmeldung: 02.11.2005
(73) Patentinhaber: Behr GmbH & Co. KG, 70469 Stuttgart (DE)
(72) Erfinder: Baruschke, Wilhelm, Dipl.-Ing., 73117 Wangen (DE); Britsch-Laudwein, Armin, 71272 Renningen (DE); Bureau, Cathy, Dipl.-Ing., Birmingham MI 48009 (US); Lochmahr, Karl, Dipl.-Ing. (FH), 71665 Vaihingen/Enz (DE); Morgenstern, Stefan, Dipl.-Ing. (FH), 70499 Stuttgart (DE)
(74) Vertreter: Grauel, Andreas

(56) Entgegenhaltungen:
- EP-B1- 0 450 351
- DE-A1- 4 139 435
- DE-C1- 4 130 226
- DE-U1- 29 513 680
- US-A1- 2002 066 281
- US-A1- 2003 077 997

## Beschreibung

Die Erfindung betrifft ein Verfahren zur Steuerung einer Klimaanlage. Des Weiteren betrifft die Erfindung eine Klimaanlage für ein Fahrzeug zur Klimatisierung des Fahrzeuginnenraums.

Klimaanlagen in einem Fahrzeug sind im Stand der Technik seit langem bekannt. Diese Klimaanlagen weisen jedoch den Nachteil auf, dass sie nicht bei Stillstand des Verbrennungsmotors des Fahrzeugs betrieben werden können, da keine Einrichtungen zum Betrieb des Klimaanlagenkompressors vorhanden sind. Insbesondere an heißen Tagen mit entsprechend hoher Sonnenstrahlungsintensität besteht jedoch ein Bedürfnis, die Fahrt mit einem bereits vorklimatisierten Fahrzeug anzutreten.

DE 41 30 226 C1 offenbart einen Verfahren nach dem Oberbegriff des Anspruchs 1.

Der Erfindung liegt daher die Aufgabe zugrunde, ein Verfahren zur Steuerung einer Klimaanlage anzugeben, welches eine Überhitzung des Fahrzeuginnenraums bei Stillstand vermeidet. Darüber hinaus ist eine besonders geeignete Klimaanlage anzugeben.

Die Aufgabe hinsichtlich des Verfahrens zur Steuerung der Klimaanlage wird erfindungsgemäß gelöst durch die Merkmale des unabhängigen Anspruchs 1. Hinsichtlich der Klimaanlage wird die Aufgabe erfindungsgemäß gelöst durch die Merkmale des unabhängigen Anspruchs 12.

Vorteilhafte Weiterbildungen der Erfindung sind Gegenstand der Unteransprüche.

Beim Verfahren zur Steuerung einer Klimaanlage für ein Fahrzeug werden für eine möglichst gute Stand- oder Vorklimatisierung des Fahrzeugs, insbesondere eines stehenden Fahrzeugs mit abgestelltem Verbrennungsmotor eine Umgebungstemperatur erfasst und ein Sollwert für die Innenraumtemperatur vorgegeben bzw, bestimmt, wobei in Abhängigkeit von der momentanen Umgebungstemperatur ein korrigierter Sollwert für die Innenraumtemperatur ermittelt wird. Der korrigierte Sollwert für die Innenraumtemperatur wird dabei in Abhängigkeit von einem vorgegebenen, insbesondere vom Fahrer oder einem Insassen eingestellten oder von einem gespeicherten Sollwert für die Innenraumtemperatur, und von der Außen- oder Umgebungstemperatur bestimmt. In einer möglichen Form wird der korrigierte Sollwert für die Innenraumtemperatur anhand der Abhängigkeit durch eine Differenz- oder Multiplikationsbildung der Umgebungstemperatur mit dem vorgegebenen Sollwert für die Innenfiemperatur ermittelt.

Alternativ kann der korrigierte Sollwert für die Innenraumtemperatur anhand einer Kennlinienfunktion für die Umgebungstemperatur und den Sollwert der Innenraumtemperatur bestimmt werden: Bevorzugt ergibt sich dabei der korrigierte Sollwert für die Innenraumtemperatur aus einem vorgegebenen Kennfeld, das den korrigierten Sollwert für die Innenraumtemperatur in Abhängigkeit von mehreren Größen, wie z. B. der Umgebungstemperatur und/oder einem vorgegebenen Sollwert für die Innenraumtemperatur, liefert. Da durch die ermittelten Größen der Innenraumtemperatur und der Umgebungstemperatur sowie gegebenenfalls ihrem zeitlichen Verlauf Informationen über äußere Umstände wie etwa Wärmezuführung durch direkte Sonneneinstrahlung bestimmt werden, kann durch ein entsprechend ausgelegtes Kennfeld eine optimale Anpassung der Standklimatisierung erreicht werden.

Je nach Steuerungs- oder Regelungsgrad der Klimatisierung des Fahrzeuginnenraums wird der korrigierte Sollwert für die Innenraumtemperatur zusätzlich oder alternativ zur Abhängigkeit von der momentanen Umgebungstemperatur und dem Sollwert für die Innenraumtemperatur auch in Abhängigkeit vom Wert der momentanen Innenraumtemperatur ermittelt.

Um eine hinreichende und zeitlich anhaltende Klimatisierung des Fahrzeuginnenraums auch im Stillstand des Fahrzeugs zu bewirken, wird der korrigierte Sollwert für die Innenraumtemperatur mit einem den vorgegebenen Sollwert für die Innenraumtemperatur überschreitenden Wert eingestellt. Mit anderen Worten: Der korrigierte Sollwert für die Innenraumtemperatur ist stets größer als der vorgegebene oder gespeicherte Sollwert für die Innenraumtemperatur für einen Normalbetrieb der Klimatisierung. Beispielsweise ist der korrigierte Sollwert für die Innenraumtemperatur, insbesondere für eine Standklimatisierung um einen 10°C größeren Wert als der vorgegebene Sollwert für die Innenraumtemperatur eingestellt. Um eine Überhitzung des Innenraums des Fahrzeugs zu vermeiden, wird der korrigierte Sollwert für die Innenraumtemperatur beispielsweise auf einen gegenüber der Umgebungstemperatur kleineren Wert, insbesondere einen um 10°C kleineren Wert, eingestellt.

Zweckmäßigerweise wird eine Klimatisierung des Innenraums anhand des korrigierten Sollwerts für die Innenraumtemperatur ausgeführt, wenn eine Batterie voll geladen ist oder einen vorbestimmten Ladezustand erreicht hat. Insbesondere wird die Klimatisierung erst dann gestartet, wenn eine vorgegebene Ladekapazität oder ein Ladezustand einer Batterie, z.B. einer Zyklenspeichereinheit, erreicht ist. D.h. die Klimatisierung anhand des korrigierten Sollwerts für die Innenraumtemperatur wird in Art einer adaptiven Temperaturregelung ausgeführt, die dann aktiviert wird, wenn ein Vergleich des korrigierten Sollwerts für die Innenraumtemperatur mit dem Wert der momentanen Innenraumtemperatur einen entsprechenden Wert ergibt. Beispielsweise wird eine Klimatisierung des Innenraums anhand des korrigierten Sollwerts für die Innenraumtemperatur ausgeführt, wenn der korrigierte Sollwert für die Innenraumtemperatur größer als der Wert der momentanen Innenraumtemperatur ist. Die Klimatisierung des Innenraums anhand des korrigierten Sollwerts für die Innenraumtemperatur wird deaktiviert oder ausgeschaltet, wenn der korrigierte Sollwert für die Innenraumtemperatur dem Wert der momentanen Innenraumtemperatur entspricht.

Alternativ oder zusätzlich wird eine Klimatisierung des Innenraums anhand des korrigierten Sollwerts für die Innenraumtemperatur ausgeschaltet, wenn der korrigierte Sollwert für die Innenraumtemperatur dem Wert der momentanen Umgebungstemperatur zumindest entspricht oder kleiner ist. Auf diese Weise kann vorteilhaft eine optimale Annäherung der Innenraumtemperatur an die Umgebungstemperatur erreicht werden, so dass ein Fahrer nach Stillstand des Fahrzeugs nicht in ein überhitztes Fahrzeug steigen muss. Der Klimakomfort ist somit erheblich gesteigert.

Bei einer weiteren Ausführungsform wird die Klimatisierung des Innenraums anhand des korrigierten Sollwerts für die Innenraumtemperatur dann ausgeschaltet oder deaktiviert, wenn ein vorgegebener Ladezustand einer Batterie unterschritten wird. Beispielsweise wird die Klimatisierung deaktiviert, wenn der Ladezustand kleiner 70% ist. D.h. eine Standklimatisierung wird nur solange ausgeführt, bis die Batterie einen Ladezustand erreicht hat, der für einen Neustart des Fahrzeugs ausreicht.

Zusätzlich oder alternativ kann, insbesondere für eine energiesparende Klimatisierung, da zur Klimatisierung der elektrisch angetriebene Kompressor eingeschaltet ist, die Klimatisierung des Innenraums anhand des korrigierten Sollwerts für die Innenraumtemperatur zeitlich begrenzt werden. So wird die Klimatisierung z. B. für eine vorgegebene Zeit von 1 min bis 3 min durchgeführt. Dadurch wird die zur Standklimatisierung benötigte Energie begrenzt, indem die Kühlung des Innenraums nur zeitweise durchgeführt wird.

Für eine Vor- oder Standklimatisierung, d.h. einer Klimatisierung im Stand des Fahrzeugs mit abgestelltem Verbrennungsmotor wird die Klimaanlage nur dann aktiviert, wenn eine Batterie einen vorgegebenen Ladezustand erreicht hat oder voll aufgeladen ist. Beispielsweise wird bei einem in der Sonne stehenden Fahrzeug, bei welchem sich der Innenraum aufheizt und die Batterie mittels beispielsweise Solarstrom aufgeladen wird, bei Erreichen einer Ladekapazität von größer 70% die Klimatisierung des Fahrzeuginnenraums auch bei abgestelltem Verbrennungsmotor und bei stehendem Fahrzeug in den verschiedenen oben beschriebenen Verfahren aktiviert. Beispielsweise wird die Klimatisierung zeitlich begrenzt, wobei als Regelungs-oder Steuergröße der korrigierte Sollwert herangezogen wird. In diesem Ausführungsbeispiel für eine Standklimatisierung wird als Abbruch- oder Endkriterium das Erreichen der momentanen Umgebungs- oder Außentemperatur verwendet.

Hinsichtlich der Klimaanlage für ein Fahrzeug umfasst diese mindestens eine Einrichtung zur Komprimierung eines Kältemittels, eine erste Einrichtung zum Austausch von Wärme und eine zweite Einrichtung zum Austausch von Wärme sowie eine Steuerungseinrichtung, welche die Klimaanlage nach dem oben beschriebenen Verfahren steuert und/oder regelt, wobei ein Temperatursensor zur Erfassung einer Umgebungstemperatur und eine Eingabeeinheit zur Vorgabe eines Sollwerts für die Innenraumtemperatur vorgesehen sind und mittels der Steuerungseinrichtung in Abhängigkeit von einer mittels des Temperatursensors erfassten momentanen Umgebungstemperatur ein korrigierter Sollwert für die Innenraumtemperatur ermittelbar ist.

Des Weiteren ist ein Temperatursensor zur Erfassung der momentanen Innenraumtemperatur vorgesehen, so dass mittels der Steuerungseinrichtung ein korrigierter Sollwert für die Innenraumtemperatur in Abhängigkeit von einem vorgegebenen Sollwert für die Innenraumtemperatur, von der momentanen Umgebungstemperatur und/oder von der Innenraumtemperatur ermittelbar ist. Die Steuerungseinrichtung ist darüber hinaus derart ausgelegt, dass eine Klimatisierung anhand des korrigierten Sollwerts für die Innenraumtemperatur ausführbar ist, wenn eine Batterie einen vorgegebenen Ladezustand erreicht hat.

Für eine Klimatisierung eines beispielsweise seit längerer Zeit stehenden Fahrzeugs und für eine möglichst umweltfreundliche und energiesparende Standklimatisierung ist zur Aufladung der Batterie eine Energieabgabeeinrichtung vorgesehen, welche mit einer Energiezwischenspeicherungseinrichtung versehen ist. Zweckmäßigerweise ist als Energieabgabeeinrichtung eine keine elektrische Energiezufuhr benötigende Energieabgabeeinrichtung vorgesehen. Beispielsweise ist als Energieabgabeeinrichtung eine Solarzelle, eine Brennstoffzelle oder eine ähnliche, von natürlichen Quellen gespeiste Energieabgabeeinrichtung vorgesehen. Somit ist der Steuerungseinrichtung eine Klimatisierung anhand des korrigierten Sollwerts für die Innenraumtemperatur auch im Stand des Fahrzeugs mit abgestelltem Verbrennungsmotor ausführbar, wenn eine Batterie mittels der Energieabgabeeinrichtung auf einen vorgegebenen Ladezustand aufgeladen ist.

Die mit der Erfindung erzielten Vorteile bestehen insbesondere darin, dass auch im Stand eines Fahrzeugs und somit zu einem jeden beliebigen Zeitpunkt eine Klimatisierung des Fahrzeugsinnenraums erzielt werden kann, wobei als Regelungs- oder Steuerungsgröße in einer adaptiven Regelung oder Steuerung ein korrigierter Sollwert für die Innenraumtemperatur herangezogen wird. Hierdurch ist eine Komfortsteigerung durch Sicherstellung hinreichend guter thermischer Klimabedingungen im Fahrzeuginnenraum vor Fahrbeginn erzielt. Darüber hinaus wird die Komfortsteigerung durch eine energie- und umweltfreundliche Speisung der Batterie, die zur Aktivierung der Klimaanlage erforderlich ist, unterstützt.

Ausführungsbeispiele der Erfindung werden anhand einer Zeichnung näher erläutert.

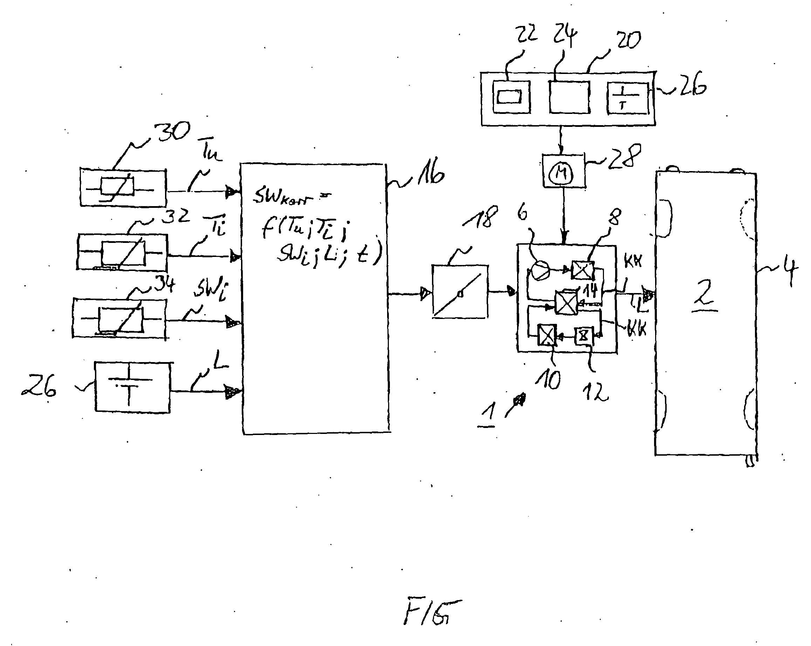

Darin zeigt die Figur eine Klimaanlage 1 zur Klimatisierung eines Innenraums 2 eines Fahrzeugs 4. Die Klimaanlage 1 ist eine herkömmliche Klimaanlage, welche eine Einrichtung 6 zur Komprimierung eines Kältemittels (= Kältemittelverdichter) und eine erste Einrichtung 8 zum Austausch von Wärme (= Kondensator) sowie eine zweite Einrichtung 10 zum Austausch von Wärme (= Verdampfer) umfasst, welche in einem Kältemittelkreislauf KK angeordnet sind. Des Weiteren sind im Kältemittelkreislauf KK ein Expansionsventil 12 und ein innerer Wärmetauscher 14 angeordnet. Daneben sind im Kältemittelkreislauf KK nicht näher dargestellte Klappen, Ventile und andere Komponenten angeordnet. Die erste Einrichtung 8 und die zweite Einrichtung 10 zum Austausch von Wärme sind darüber hinaus sekundärseitig in einem nicht näher dargestellten Luftkreislauf zur Klimatisierung einer in den Innenraum 2 zu führenden Klimatisierungs-Luft KL angeordnet.

Zur Steuerung der Klimaanlage 1 ist eine Steuerungseinrichtung 16 vorgesehen, deren Ausgangssignale A einem Stellglied 18 für die Klimaanlage 1 zugeführt werden.

Daneben ist für eine Standklimatisierung des Fahrzeugs 4 eine Energieabgabeeinrichtung 20 zum Betreiben der Klimaanlage 1 vorgesehen. Je nach Ausbildung der Energieabgabeeinrichtung 20 kann diese als ein Solarpaneel 22, eine Brennstoffzelle 24 und/oder eine Batterie 26, z. B. eine Zyklenspeicher-Batterie, ausgebildet sein. Die Batterie 26 wird dabei auch als Energiezwischenspeicher verwendet, um einen mittels einer der Energieabgabeeinrichtungen 20 erzeugten Strom zwischenzuspeichem. Mittels der Energieabgabeeinrichtung 20 wird beispielsweise beim Fahrzeug 4 mit abgestelltem Verbrennungsmotor zum Betrieb der Klimaanlage 1 Strom aus einer der E-nergieabgabeeinrichtungen 20 entnommen, wobei anstelle der motorgetriebenen Einrichtung 6 zum Komprimieren des Kältemittels ein E-Kompressor 28 zur Komprimierung des Kältemittel angetrieben wird.

Nachfolgend wird die Steuereinrichtung 16 zum Betreiben der Klimaanlage 1, insbesondere zum Betreiben der Klimaanlage 1 im Stillstand des Fahrzeugs 4 für eine Vor- oder Standklimatisierung, näher beschrieben.

Für eine Standklimatisierung wird mittels der Steuereinrichtung 16 vorzugsweise kontinuierlich oder in vorgegebenen Zeitabständen der Ladezustand L und/oder die Belastbarkeit der Batterie 26 geprüft. Des Weiteren wird mittels der Steuereinrichtung 16 eine von einem Temperatursensor 30 erfasste Umgebungstemperatur Tu, eine von einem weiteren Temperatursensor 32 erfasste Innenraumtemperatur Ti und/oder ein von einer Eingabeeinheit 34 vorgegebener Sollwert SWi für die Innenraumtemperatur Ti überwacht und verarbeitet. Die Eingabeeinheit 34 ist beispielsweise als ein Sollwertsteller ausgebildet, durch welchen ein Benutzer, z.B. ein Fahrer eine gewünschte Innenraumtemperatur Ti für den Innenraum 2, insbesondere vor Fahrantritt einstellen kann.

Für eine Vor- oder Standklimatisierung wird mittels der Steuereinrichtung 16 die vom Temperatursensor 30 erfasste Umgebungstemperatur Tu ermittelt und zur Bestimmung eines korrigierten Sollwerts SWₖₒᵣᵣ für die Innenraumtemperatur Ti verwendet. Der korrigierte Sollwert SWₖₒᵣᵣ für die Innenraumtemperatur Ti wird dann zur Steuerung der Klimaanlage 1 verwendet, wobei der Innenraum 2 des Fahrzeugs 4 je nach Funktion und Vorgabe sowie Modi der Klimaanlagensteuerung zeitweise und/oder ereignisgesteuert klimatisiert wird.

Beispielsweise wird bei der Bestimmung des korrigierten Sollwerts SWₖₒᵣᵣ für die Innenraumtemperatur Ti neben der Umgebungstemperatur Tu zusätzlich oder alternativ der Sollwert SWi für die Innenraumtemperatur Ti und/oder ein Wert der momentanen Innenraumtemperatur Ti berücksichtigt. D.h. es können mehrere Betriebsarten eingestellt werden. Unter anderem kann bei einer Klimatisierung des Innenraums 2 während der Fahrt des Fahrzeugs 4 der vom Fahrer oder einem Insassen vorgegebene Sollwert SWi für die Innenraumtemperatur Ti zur Bestimmung des korrigierten Sollwerts SWₖₒᵣᵣ für die Innenraumtemperatur Ti herangezogen werden.

Demgegenüber wird bei einem Fahrzeug 4, welches in einer warmen Umgebung unter Sonneneinstrahlung abgestellt ist, für eine Vorklimatisierung oder Standklimatisierung die Umgebungstemperatur Tu und/oder die Innenraumtemperatur Ti zur Bestimmung des korrigierten Sollwerts SWₖₒᵣᵣ für die Innenraumtemperatur Ti herangezogen. Dabei wird der Innenraum 2 bevorzugt auf eine an die Umgebungstemperatur Tu entsprechende Temperatur klimatisiert, so dass der Benutzer des Fahrzeugs 4 beim Einsteigen in ein sonst aufgrund der Sonneneinwirkung stark überhitztes Fahrzeug in ein angenehm klimatisiertes Fahrzeug einsteigt. Hierzu wird der korrigierte Sollwert zur Bestimmung des korrigierten Sollwerts SWₖₒᵣᵣ für die Innenraumtemperatur Ti vorzugsweise mit einem den vorgegebenen Sollwert SW für die Innenraumtemperatur Ti überschreitenden Wert, z.B. mit einem 10°C höheren Wert, oder mit einem die Umgebungstemperatur Tu unterschreitenden Wert, z.B. mit einem 10°C kleineren Wert, oder mit einem der Umgebungstemperatur entsprechenden Wert eingestellt.

Darüber hinaus wird eine Standklimatisierung des Innenraums 2 anhand des zur Bestimmung des korrigierten Sollwerts SWₖₒᵣᵣ für die Innenraumtemperatur Ti, insbesondere dann ausgeführt, wenn die Batterie 26 voll geladen ist oder einen vorbestimmten Ladezustand L erreicht hat. Mit anderen Worten: Die maximale Abkühlleistung im Stillstand wird bestimmt vom Ladezustand L der Batterie 26 und/oder der Belastbarkeit der Batterie 26. Um eine Standklimatisierung anhand von vorhandenen Energiereserven durchzuführen, wird insbesondere als Batterie 26 eine sogenannte Zyklenspeicherbatterie oder Zwischenspeicherbatterie verwendet, welche die Energie des Solarpaneels 22 oder der Brennstoffzelle 24 zwischenspeichert.

Für eine zeitweise oder ereignisgesteuerte Standklimatisierung, welche die Batterie 26 nur zeitweise belastet, wird die Klimatisierung des Innenraums 2 anhand des korrigierten Sollwerts SWₖₒᵣᵣ für die Innenraumtemperatur Ti in Abhängigkeit von einem Vergleich des korrigierten Sollwerts SWₖₒᵣᵣ für die Innenraumtemperatur Ti mit dem Wert für die momentane Innenraumtemperatur Ti ausgeführt. Beispielsweise wird die Standklimatisierung nur dann gestartet oder aktiviert, wenn der korrigierte Sollwert SWₖₒᵣᵣ für die Innenraumtemperatur Ti größer als der Wert der momentanen Innenraumtemperatur Ti ist.

Die Klimatisierung des Innenraums 2 anhand des korrigierten Sollwerts SWₖₒᵣᵣ für die Innenraumtemperatur Ti wird dagegen deaktiviert oder ausgeschaltet, wenn der korrigierte Sollwert SWₖₒᵣᵣ für die Innenraumtemperatur Ti dem Wert der momentanen Innenraumtemperatur Ti entspricht. Alternativ oder zusätzlich kann die Klimatisierung des Innenraums 2 ausgeschaltet werden, wenn der korrigierte Sollwert SWₖₒᵣᵣ für die Innenraumtemperatur Ti dem Wert der momentanen Umgebungstemperatur Tu entspricht.

Um darüber hinaus nach einer Standklimatisierung einen Neustart des Fahrzeugs 4 sicherstellen zu können, wird die Klimatisierung des Innenraums 2 anhand des korrigierten Sollwerts SWₖₒᵣᵣ für die Innenraumtemperatur Ti dann ausgeschaltet, wenn ein vorgegebener Ladezustand L der Batterie 26 unterschritten wird.

Bei einer weiteren Betriebsart für die Standklimatisierung kann die Klimatisierung des Innenraums 2 anhand des korrigierten Sollwerts SWₖₒᵣᵣ für die Innenraumtemperatur Ti zeitlich begrenzt werden. Beispielsweise wird die Klimatisierung für eine vorgegebene Zeit t von 1 min bis 3 min durchgeführt wird.

Durch das hier beschriebene Verfahren zur Steuerung einer Klimaanlage 1, welches insbesondere für eine Standklimatisierung oder Vorklimatisierung geeignet ist, wird ein beispielsweise einer starken Sonneneinstrahlung ausgesetztes Fahrzeug 4 besonders energiesparend und umweltfreundlich im Stilltand des Fahrzeugs 4 bei abgestelltem Verbrennungsmotor klimatisiert. Insbesondere wird der Innenraum 2 auf eine Innenraumtemperatur Ti mittels des korrigierten Sollwerts SWₖₒᵣᵣ für die Innenraumtemperatur Ti klimatisiert, wobei in etwa eine der Außen- oder Umgebungstemperatur Tu entsprechende Temperatur eingestellt oder eine zeitweise und energiesparende, aber schnelle und effiziente Klimatisierung durchgeführt wird. Somit wird auch während eines Stillstands oder Stillstandsphasen, z. B. bei einem Ampelstopp oder an einer Bahnschranke im Start-Stopp-Modus des Fahrzeugs 4, eine hinreichend gute Erhaltungsklimatisierung ausgeführt.

Zudem kann der korrigierte Sollwert SWₖₒᵣᵣ für die Innenraumtemperatur Ti anhand einer Kennlinienfunktion für die Umgebungstemperatur Tu und den Sollwert SWi der Innenraumtemperatur Ti bestimmt werden. Bevorzugt ergibt sich dabei der korrigierte Sollwert SWₖₒᵣᵣ für die Innenraumtemperatur Ti aus einem vorgegebenen Kennfeld, das den korrigierten Sollwert SWₖₒᵣᵣ für die Innenraumtemperatur Ti in Abhängigkeit von mehreren Größen, wie z. B. der Umgebungstemperatur Tu und/oder einem vorgegebenen Sollwert SWi für die Innenraumtemperatur Ti, liefert. Auch können hierdurch aufgrund des zeitlichen Verlaufs der Umgebungstemperatur Tu und der Innenraumtemperatur Ti Informationen über äußere Umstände wie etwa Wärmezuführung durch direkte Sonneneinstrahlung bestimmt werden und durch ein entsprechend ausgelegtes Kennfeld bei der Standkilmatisierung berücksichtigt werden.

Insbesondere wird die hier beschriebene Klimatisierung, z.B. die Standklimatisierung, anhand des korrigierten Sollwerts SWₖₒᵣᵣ für die Innenraumtemperatur Ti in Art einer adaptiven Temperaturregelung ausgeführt, die dann aktiviert wird, wenn eine der oben beschriebenen Bedingungen erfüllt ist, beispielsweise wenn ein Vergleich des korrigierten Sollwerts SWₖₒᵣᵣ für die Innenraumtemperatur Ti mit dem Wert der momentanen Innenraumtemperatur Ti einen entsprechenden Wert ergibt.

### Bezugszeichenliste

- 1: Klimaanlage
- 2: Innenraum
- 4: Fahrzeug
- 6: Einrichtung zur Komprimierung eines Kältemittels
- 8: erste Einrichtung zum Austausch von Wärme
- 10: zweite Einrichtung zum Austausch von Wärme
- 12: Expansionsventil
- 14: innerer Wärmetauscher
- 16: Steuerungseinrichtung
- 18: Stellglied
- 20: Energieabgabeeinrichtung
- 22: Solarpaneel
- 24: Brennstoffzelle
- 26: Batterie
- 28: E-Kompressor
- 30: Temperatursensor
- 32: Temperatursensor
- 34: Eingabeeinheit

- A: Ausgangssignale
- KL: Klimatisierungs-Luft
- KK: Kättemittelkreislauf
- Ti: Innenraumtemperatur
- Tu: Umgebungstemperatur
- SWi: Sollwert für die Innenraumtemperatur
- SWₖₒᵣᵣ: korrigierter Sollwert für die Innenraumtemperatur

## Patentansprüche

1. Verfahren zur Steuerung einer Klimaanlage (1) für ein Fahrzeug (4) im Stillstand, bei dem eine Umgebungstemperatur (Tu) erfasst wird und ein Sollwert (SWi) für die Innenraumtemperatur (Ti) vorgegeben wird, wobei In Abhängigkeit von der momentanen Umgebungstemperatur (Tu) ein korrigierter Sollwert (SWₖₒᵣᵣ) für die Innenraumtemperatur (Ti) ermittelt wird, **dadurch gekennzeichnet, dass** der korrigierte Sollwert (SWₖₒᵣᵣ) für die Innenraumtemperatur (Ti) mit einem den vorgegebenen Sollwert (SWi) für die Innenraumtemperatur (Ti) überschreitenden Wert eingestellt wird.

2. Verfahren nach Anspruch 1, bei dem der korrigierte Sollwert (SWₖₒᵣᵣ) für die Innenraumtemperatur (Ti) in Abhängigkeit von der momentanen Umgebungstemperatur (Tu), dem Sollwert (SWi) für die Innenraumtemperatur (Ti) und/oder einem Wert momentanen Innenraumtemperatur (Ti) ermittelt wird.

3. Verfahren nach einem der Ansprüche 1 bis 2, bei dem eine Klimatisierung des Innenraums (2) anhand des korrigierten Sollwerts (SWₖₒᵣᵣ) für die Innenraumtemperatur (Ti) ausgeführt wird, wenn eine Batterie (26) voll geladen ist oder einen vorbestimmten Ladezustand (L) erreicht hat.

4. Verfahren nach einem der Ansprüche 1 bis 3, bei dem eine Klimatisierung des Innenraums (2) anhand des korrigierten Sollwerts (SWₖₒᵣᵣ) für die Innenraumtemperatur (Ti) ausgeführt wird, wobei der korrigierte Sollwert (SWₖₒᵣᵣ) für die Innenraumtemperatur (Ti) mit dem Wert für die momentane Innenraumtemperatur (Ti) verglichen wird.

5. Verfahren nach einem der Ansprüche 1 bis 4, bei dem eine Klimatisierung des Innenraums (2) anhand des korrigierten Sollwerts (SWₖₒᵣᵣ) für die Innenraumtemperatur (Ti) zeitlich begrenzt wird.

6. Verfahren nach Anspruch 5, bei dem die Klimatisierung für eine vorgegebene Zeit (t) von 1 min bis 3 min durchgeführt wird.

7. Verfahren nach einem der Ansprüche 1 bis 6, bei dem eine Klimatisierung des Innenraums (2) anhand des korrigierten Sollwerts (SWₖₒᵣᵣ) für die Innenraumtemperatur (Ti) ausgeführt wird, wenn der korrigierte Sollwert (SWₖₒᵣᵣ) für die Innenraumtemperatur (Ti) größer als der Wert der momentanen Innenraumtemperatur (Ti) ist.

8. Verfahren nach einem der Ansprüche 1 bis 7, bei dem eine Klimatisierung des Innenraums (2) anhand des korrigierten Sollwerts (SWₖₒᵣᵣ) für die Innenraumtemperatur (Ti) ausgeschaltet wird, wenn der korrigierte Sollwert (SWₖₒᵣᵣ) für die Innenraumtemperatur (Ti) dem Wert der momentanen Innenraumtemperatur (Ti) entspricht.

9. Verfahren nach einem der Ansprüche 1 bis 8, bei dem eine Klimatisierung des Innenraums (2) anhand des korrigierten Sollwerts (SWₖₒᵣᵣ) für die Innenraumtemperatur (Ti) ausgeschaltet wird, wenn der korrigierte Sollwert (SWₖₒᵣᵣ) für die Innenraumtemperatur (Ti) dem Wert der momentanen Umgebungstemperatur (Tu) entspricht.

10. Verfahren nach einem der Ansprüche 1 bis 9, bei dem eine Klimatisierung des Innenraums (2) anhand des korrigierten Sollwerts (SWₖₒᵣᵣ) für die Innenraumtemperatur (Ti) ausgeschaltet wird, wenn ein vorgegebener Ladezustand (L) einer Batterie (26) unterschritten wird.

11. Verfahren nach einem der Ansprüche 1 bis 10, bei dem eine Klimatisierung im Stand des Fahrzeugs (4) mit abgestelltem Verbrennungsmotor ausgeführt wird, wenn eine Batterie (26) einen vorgegebenen Ladezustand (L) erreicht hat oder voll aufgeladen ist.

12. Klimaanlage (1) für ein Fahrzeug (4) mit mindestens einer Einrichtung (6) zur Komprimierung eines Kältemittels, einer ersten Einrichtung (8) zum Austausch von Wärme und einer zweiten Einrichtung (10) zum Austausch von Wärme sowie einer Steuerungseinrichtung (16), welche die Klimaanlage (1) nach einem Verfahren nach einem der Ansprüche 1 bis 11 steuert und/oder regelt, wobei ein Temperatursensor (30) zur Erfassung einer Umgebungstemperatur (Tu) und eine Eingabeeinheit (34) zur Vorgabe eines Sollwerts (SWi) für die Innenraumtemperatur (Ti) vorgesehen sind, wobei mittels der Steuerungseinrichtung (16) in Abhängigkeit von einer mittels des Temperatursensors (30) erfassten momentanen Umgebungstemperatur (Tu) ein korrigierter Sollwert (SWₖₒᵣᵣ) für die Innenraumtemperatur (Ti) ermittelbar ist, **dadurch gekennzeichnet, dass** der korrigierte Sollwert (SWₖₒᵣᵣ) für die Innenraumtemperatur (Ti) stets größer ist als der für die Innenraumtemperatur (Ti) vorgegebene Sollwert (SWi).

13. Klimaanlage nach Anspruch 12, bei der ein Temperatursensor (32) zur Erfassung der momentanen Innenraumtemperatur (Ti) vorgesehen ist.

14. Klimaanlage nach Anspruch 12 oder 13, bei der mittels der Steuerungseinrichtung (16) ein korrigierter Sollwert (SWₖₒᵣᵣ) für die Innenraumtemperatur (Ti) in Abhängigkeit von einem vorgegebenen Sollwert (SWi) für die Innenraumtemperatur (Ti), der momentanen Umgebungstemperatur (Tu) und/oder der Innenraumtemperatur (Ti) ermittelbar ist.

15. Klimaanlage nach einem der Ansprüche 12 bis 14, bei der mittels der Steuerungseinrichtung (16) eine Klimatisierung anhand des korrigierten Sollwerts (SWₖₒᵣᵣ) für die Innenraumtemperatur (Ti) ausführbar ist, wenn eine Batterie (26) einen vorgegebenen Ladezustand (L) erreicht hat.

16. Klimaanlage nach Anspruch 15, bei der zur Aufladung der Batterie (26) eine Energieabgabeeinrichtung (20) vorgesehen ist, welche mit einem Energiezwischenspeicher versehen ist.

17. Klimaanlage nach Anspruch 16, bei der als Energieabgabeeinrichtung (20) eine Solarpaneel (22), eine Brennstoffzelle (24) oder eine ähnliche Energieabgabeeinrichtung vorgesehen ist.

18. Klimaanlage nach Anspruch 16 oder 17, bei der mittels der Steuerungseinrichtung (16) eine Klimatisierung anhand des korrigierten Sollwerts (SWₖₒᵣᵣ) für die Innenraumtemperatur (Ti) im Stand des Fahrzeugs (4) mit abgestelltem Verbrennungsmotor ausführbar ist, wenn eine Batterie (26) mittels der Energieabgabeeinrichtung (20) auf einen vorgegebenen Ladezustand (L) aufgeladen ist.

## Claims

1. Method for controlling an air-conditioning system (1) for a vehicle (4) when stationary in which an ambient temperature (Tu) is measured and a reference value (SWi) for the passenger compartment temperature (Ti) is predetermined, a corrected reference value (SWₖₒᵣᵣ) for the passenger compartment temperature (Ti) being determined dependent on the ambient temperature (Tu) at a given point in time,
**characterised in that**
the corrected reference value (SWₖₒᵣᵣ) for the passenger compartment temperature (Ti) is set at a value which exceeds the predetermined reference value (SWi) for the passenger compartment temperature (Ti).

2. Method in accordance with claim 1,
in which the corrected reference value (SWₖₒᵣᵣ) for the passenger compartment temperature (Ti) is determined dependent on the ambient temperature (Tu) at the given point in time, the reference value (SWi) for the passenger compartment temperature (Ti) and/or a value for the passenger compartment temperature (Ti) at the given point in time.

3. Method in accordance with one of claims 1 to 2,
in which the passenger compartment (2) is air-conditioned using the corrected reference value (SWₖₒᵣᵣ) for the passenger compartment temperature (Ti) when a battery (26) is fully charged or has reached a predetermined charge level (L).

4. Method in accordance with one of claims 1 to 3,
in which the passenger compartment (2) is air-conditioned using the corrected reference value (SWₖₒᵣᵣ) for the passenger compartment temperature (Ti), said corrected reference value (SWₖₒᵣᵣ) for the passenger compartment temperature (Ti) being compared with the value for the passenger compartment temperature (Ti) at the given point in time.

5. Method in accordance with one of claims 1 to 4,
in which the passenger compartment (2) is air-conditioned using the corrected reference value (SWₖₒᵣᵣ) for a limited period of time.

6. Method in accordance with claim 5,
in which air-conditioning is effected for a predetermined time (t) of 1 min. to 3 min.

7. Method in accordance with one of claims 1 to 6,
in which the passenger compartment (2) is air-conditioned using the corrected reference value (SWₖₒᵣᵣ) for the passenger compartment temperature (Ti) if the corrected reference value (SWₖₒᵣᵣ) for the passenger compartment temperature (Ti) is greater than the value of the passenger compartment temperature (Ti) at the given point in time.

8. Method in accordance with one of claims 1 to 7,
in which air-conditioning of the passenger compartment (2) using the corrected reference value (SWₖₒᵣᵣ) for the passenger compartment temperature (Ti) is switched off if the corrected reference value (SWₖₒᵣᵣ) for the passenger compartment temperature (Ti) corresponds to the value of the passenger compartment temperature (Ti) at the given point in time.

9. Method in accordance with one of claims 1 to 8,
in which air-conditioning of the passenger compartment (2) using the corrected reference value (SWₖₒᵣᵣ) for the passenger compartment temperature (Ti) is switched off if the corrected reference value (SWₖₒᵣᵣ) for the passenger compartment temperature (Ti) corresponds to the value of the ambient temperature (Tu) at the given point in time.

10. Method in accordance with one of claims 1 to 9,
in which air-conditioning of the passenger compartment (2) using the corrected reference value (SWₖₒᵣᵣ) for the passenger compartment temperature (Ti) is switched off if the level of a battery (26) falls below a predetermined charge (L).

11. Method in accordance with one of claims 1 to 10,
in which air-conditioning is effected when the vehicle (4) is stationary with the internal combustion engine switched off if a battery (26) has reached a predetermined charge level (L) or is fully charged.

12. Air-conditioning system (1) for a vehicle (4) having at least one device (6) for compressing a refrigerant, a first device (8) for exchanging heat, a second device (10) for exchanging heat and a control device (16) which controls and/or regulates the air-conditioning system (1) in accordance with a method disclosed in one of claims 1 to 11, a temperature sensor (30) for measuring an ambient temperature (Tu) and an input unit (34) for predetermining a reference value (SWi) for the passenger compartment temperature (Ti) being provided, it being possible by means of the control device (16) to determine a corrected reference value (SWₖₒᵣᵣ) for the passenger compartment temperature (Ti) dependent on an ambient temperature (Tu) at the given point in time measured by the temperature sensor (30),
**characterised in that**
the corrected reference value (SWₖₒᵣᵣ) for the passenger compartment temperature (Ti) is always greater than the reference value (SWi) predetermined for the passenger compartment temperature (Ti).

13. Air-conditioning system in accordance with claim 12,
in which a temperature sensor (32) is provided for measuring the passenger compartment temperature (Ti) at given point in time.

14. Air-conditioning system in accordance with claim 12 or 13,
in which it is possible by means of the control device (16) to determine a corrected reference value (SWₖₒᵣᵣ) for the passenger compartment temperature (Ti) dependent on a predetermined reference value (SWi) for the passenger compartment temperature (Ti), the ambient temperature (Tu) at the given point in time and/or the passenger compartment temperature (Ti).

15. Air-conditioning system in accordance with one of claims 12 to 14,
in which it is possible by means of the control device (16) to effect air conditioning using the corrected reference value (SWₖₒᵣᵣ) for the passenger compartment temperature (Ti) if a battery (26) has reached a predetermined charge level (L).

16. Air-conditioning system in accordance with claim 15,
in which a power delivery device (20) equipped with an intermediate power storage device is provided to charge the battery (26).

17. Air-conditioning system in accordance with claim 16,
in which a solar panel (22), a fuel cell (24) or a similar power delivery device is provided as the power delivery device (20).

18. Air-conditioning system in accordance with claim 16 or 17,
in which it is possible by means of the control device (16) to effect air conditioning using the corrected reference value (SWₖₒᵣᵣ) for the passenger compartment temperature (Ti) while the vehicle (4) is stationary with the internal combustion engine switched off if a battery (26) is charged to a predetermined charge level (L) by means of a power delivery device (20).

## Revendications

1. Procédé de régulation d'un système de climatisation (1) pour un véhicule (4) à l'arrêt, procédé dans lequel une température ambiante (Tu) est détectée et une valeur théorique (SWi) est prédéfinie pour la température de l'habitacle (Ti), où, en fonction de la température ambiante (Tu) au moment considéré, est détectée une valeur théorique corrigée (SWₖₒᵣᵣ) pour la température de l'habitacle (Ti),
**caractérisé en ce que** la valeur théorique corrigée (SWₖₒᵣᵣ) pour la température de l'habitacle (Ti) est réglée avec une valeur dépassant la limite supérieure de la valeur théorique prédéfinie (SWi) pour la température de l'habitacle (Ti).

2. Procédé selon la revendication 1, dans lequel la valeur théorique corrigée (SWₖₒᵣᵣ) pour la température de l'habitacle (Ti) est calculée en fonction de la température ambiante (Tu) au moment considéré, en fonction de la valeur théorique (SWi) pour la température de l'habitacle (Ti) et / ou d'une valeur de la température de l'habitacle (Ti) au moment considéré.

3. Procédé selon la revendication 1 ou 2, dans lequel une climatisation de l'habitacle (2) est fonctionnelle à l'aide de la valeur théorique corrigée (SWₖₒᵣᵣ) pour la température de l'habitacle (Ti), lorsqu'une batterie (26) est complètement chargée ou a atteint un état de charge (L) prédéfini.

4. Procédé selon l'une quelconque des revendications 1 à 3, dans lequel une climatisation de l'habitacle (2) est fonctionnelle à l'aide de la valeur théorique corrigée (SWₖₒᵣᵣ) pour la température de l'habitacle (Ti), où la valeur théorique corrigée (SWₖₒᵣᵣ) pour la température de l'habitacle (Ti) est comparée à la valeur pour la température de l'habitacle (Ti) au moment considéré.

5. Procédé selon l'une quelconque des revendications 1 à 4, dans lequel une climatisation de l'habitacle (2) est limitée dans le temps, à l'aide de la valeur théorique corrigée (SWₖₒᵣᵣ) pour la température de l'habitacle (Ti).

6. Procédé selon la revendication 5, dans lequel la climatisation est fonctionnelle pour un laps de temps prédéfini (t) compris entre 1 minute et 3 minutes.

7. Procédé selon l'une quelconque des revendications 1 à 6, dans lequel une climatisation de l'habitacle (2) est fonctionnelle à l'aide de la valeur théorique corrigée (SWₖₒᵣᵣ) pour la température de l'habitacle (Ti), lorsque la valeur théorique corrigée (SWₖₒᵣᵣ) pour la température de l'habitacle (Ti) est supérieure à la valeur de la température de l'habitacle (Ti) au moment considéré.

8. Procédé selon l'une quelconque des revendications 1 à 7, dans lequel une climatisation de l'habitacle (2) est coupée à l'aide de la valeur théorique corrigée (SWₖₒᵣᵣ) pour la température de l'habitacle (Ti), lorsque la valeur théorique corrigée (SWₖₒᵣᵣ) pour la température de l'habitacle (Ti) correspond à la valeur de la température de l'habitacle (Ti) au moment considéré.

9. Procédé selon l'une quelconque des revendications 1 à 8, dans lequel une climatisation de l'habitacle (2) est coupée à l'aide de la valeur théorique corrigée (SWₖₒᵣᵣ) pour la température de l'habitacle (Ti), lorsque la valeur théorique corrigée (SWₖₒᵣᵣ) pour la température de l'habitacle (Ti) correspond à la valeur de la température ambiante (Tu) au moment considéré.

10. Procédé selon l'une quelconque des revendications 1 à 9, dans lequel une climatisation de l'habitacle (2) est coupée à l'aide de la valeur théorique corrigée (SWₖₒᵣᵣ) pour la température de l'habitacle (Ti), lorsque la limite inférieure d'un état de charge prédéfini (L) d'une batterie (26) est dépassée.

11. Procédé selon l'une quelconque des revendications 1 à 10, dans lequel une climatisation est fonctionnelle, le véhicule (4) étant à l'arrêt et le moteur à combustion interne coupé, lorsqu'une batterie (26) a atteint un état de charge (L) prédéfini ou est complètement rechargée.

12. Système de climatisation (1) pour un véhicule (4) comprenant au moins un dispositif (6) servant à la compression d'un fluide frigorigène, un premier dispositif (8) servant à l'échange de chaleur et un deuxième dispositif (10) servant à l'échange de chaleur ainsi qu'un dispositif de régulation (16) qui commande et / ou régule le système de climatisation (1) selon un procédé selon l'une quelconque des revendications 1 à 11, où il est prévu un capteur de température (30) servant à détecter une température ambiante (Tu), et une unité d'entrée (34) servant à prédéfinir une valeur théorique (SWi) pour la température de l'habitacle (Ti), où une valeur théorique corrigée (SWₖₒᵣᵣ) pour la température de l'habitacle (Ti) peut être déterminée au moyen du dispositif de régulation (16), en fonction d'une température ambiante (Tu) au moment considéré, détectée au moyen du capteur de température (30),
**caractérisé en ce que** la valeur théorique corrigée (SWₖₒᵣᵣ) pour la température de l'habitacle (Ti) est toujours supérieure à la valeur théorique prédéfinie (SWi) pour la température de l'habitacle (Ti).

13. Système de climatisation selon la revendication 12, dans lequel il est prévu un capteur de température (32) servant à détecter la température de l'habitacle (Ti) au moment considéré.

14. Système de climatisation selon la revendication 12 ou 13, dans lequel, au moyen du dispositif de régulation (16), une valeur théorique corrigée (SWₖₒᵣᵣ) pour la température de l'habitacle (Ti) peut être déterminée en fonction d'une valeur théorique prédéfinie (SWi) pour la température de l'habitacle (Ti), en fonction de la température ambiante (Tu) au moment considéré et / ou de la température de l'habitacle (Ti).

15. Système de climatisation selon l'une quelconque des revendications 12 à 14, dans lequel, au moyen du dispositif de régulation (16), une climatisation peut être fonctionnelle à l'aide de la valeur théorique corrigée (SWₖₒᵣᵣ) pour la température de l'habitacle (Ti), lorsqu'une batterie (26) a atteint un état de charge prédéfini (L).

16. Système de climatisation selon la revendication 15, dans lequel, pour la charge de la batterie (26), il est prévu un dispositif de fourniture d'énergie (20) qui est doté d'un accumulateur d'énergie intermédiaire.

17. Système de climatisation selon la revendication 16, dans lequel il est prévu, comme dispositif de fourniture d'énergie (20), un panneau solaire (22), une pile à combustible (24) ou un dispositif de fourniture d'énergie de type similaire.

18. Système de climatisation selon la revendication 16 ou 17, dans lequel, au moyen du dispositif de régulation (16), une climatisation peut être fonctionnelle à l'aide de la valeur théorique corrigée (SWₖₒᵣᵣ) pour la température de l'habitacle (Ti), le véhicule (4) étant à l'arrêt et le moteur à combustion interne coupé, lorsqu'une batterie (26) est chargée à un état de charge prédéfini (L) au moyen du dispositif de fourniture d'énergie (20).
